# EUROPÄISCHE PATENTSCHRIFT

(11) **EP 3 973 484 B1**
(45) Veröffentlichungstag und Bekanntmachung des Hinweises auf die Patenterteilung: **22.05.2024**
(21) Anmeldenummer: 20725195.0
(22) Anmeldetag: 18.05.2020
(51) Int. Cl.: G06K 19/06, G06K 19/07, G06K 19/077, G06Q 10/0833

(54) **VERFOLGUNG VON PRODUKTEN**
TRACKING OF PRODUCTS
SUIVI DE PRODUITS

(30) Priorität: 22.05.2019 EP 19175840; 06.02.2020 EP 20155772
(43) Veröffentlichungstag der Anmeldung: 30.03.2022
(73) Patentinhaber: Bayer Aktiengesellschaft, 51373 Leverkusen (DE)
(72) Erfinder: BACKHAUS, Christof, 42499 Hückeswagen (DE); BERGER, Katharina, 53919 Weilerswist (DE); SCHENKEL, Uwe, 40764 Langenfeld (DE); SCHMIDT, Jürgen, 57334 Bad Laasphe (DE); SPETH, Walter, 50259 Pulheim (DE); GLISMANN, Klaus, 50825 Köln (DE); WILLMS, Eric, 50939 Köln (DE); STORZ, Markus, 51375 Leverkusen (DE); WENDT, Arne, 51399 Burscheid (DE); DIBBLE, Gregory, Chesterfield, MO 63017 (US); FUECHTENBUSCH, Richard, 41542 Dormagen (DE)
(74) Vertreter: BIP Patents
(86) Internationale Anmeldenummer: PCT/EP2020/063750
(87) Internationale Veröffentlichungsnummer: WO 2020/234209

(56) Entgegenhaltungen:
- WO-A1-2006/072268
- WO-A1-2018/234357
- WO-A1-2019/055161
- WO-A2-2006/031824
- US-A1- 2004 066 296
- US-A1- 2007 069 895
- US-A1- 2007 152 822
- US-A1- 2007 210 173
- US-A1- 2008 061 153
- US-A1- 2009 167 531
- US-A1- 2009 309 722
- US-A1- 2013 044 007
- US-A1- 2013 285 681
- US-A1- 2015 332 142
- US-A1- 2018 322 454

## Beschreibung

Die vorliegende Erfindung befasst sich mit der Verfolgung von Produkten mit Hilfe von aktiven Funketiketten.

Für einen Hersteller und/oder Vertreiber von Produkten kann die Verfolgung von Produkten sinnvoll oder sogar notwendig sein. Pharmazeutische Produkte und Pflanzenschutzmittel unterliegen beispielsweise einer Reihe von behördlichen Regularien; dazu zählt in einigen Staaten die Anforderung, eine Rückverfolgbarkeit der Produkte zu gewährleisten (Track & Trace). Für diesen Zweck werden einzelne Verpackungen mit einer eindeutigen Kennung (z.B. einer Seriennummer) versehen (Serialisierung), um sie zu einem späteren Zeitpunkt eindeutig identifizieren zu können. Anhand der eindeutigen Kennung lässt sich ein Produkt, das man in den Händen hält, eindeutig zuordnen; es ist jedoch nicht möglich, den Standort eines Produkts, das in den Verkehr gebracht worden ist, oder seinen Zustand allein anhand der eindeutigen Kennung zu ermitteln.

Eine Verfolgung von Produkten kann auch für die Optimierung der Produktion und/oder für logistische Zwecke wertvoll sein. Falls ein Nutzer oder Vertreiber von Verbrauchsprodukten einen hohen Lagerbestand hat, ist nicht damit zu rechnen, dass dieser Nutzer/Vertreiber kurzfristig eine größere Menge an neuen Produkten bestellen wird. Diese Information kann in die Planung der Herstellung der Produkte und/oder die Verteilung und/oder Lagerung bereits hergestellter Produkte einfließen, um eine optimale Produktionsmaschinenauslastung und/oder Lagerstättenauslastung und/oder Transportmittelauslastung zu erzielen.

Es wäre daher wünschenswert zu wissen, wo sich einzelne Produkte, die in den Verkehr gebracht worden sind, befinden.

US2018/0322454A1 offenbart ein Gerät zur Überwachung, Verfolgung und Nachverfolgung einer Vielzahl von Gütern.

WO2019/055161A1 offenbart ein Einwegetikett zur Paketverfolgung.

Ferner wäre es wünschenswert zu wissen, ob eine Verpackung, in der sich ein Produkt üblicherweise befindet, bevor es genutzt wird, bereits geöffnet worden ist oder noch ungeöffnet ist, da bei geöffneten Verpackungen in der Regel davon ausgegangen werden kann, dass die darin befindlichen Produkte in absehbarer Zeit genutzt werden und dann neue Produkte benötigt werden.

Ferner wäre es vorteilhaft, einfach erkennen zu können, ob ein Produkt beschädigt oder geöffnet worden ist, bevor es an seinem Bestimmungsort angekommen ist.

US2004/0066296A1 offenbart ein fälschungsanzeigendes Radiofrequenz-Identifikationsetikett mit Verfolgungsfunktion.

Es wäre wünschenswert, die gesamte Logistikkette - von der Herstellung bis zum Verbrauch/Gebrauch des Produkts - überwachen zu können, beispielsweise um prüfen zu können, ob Lagerbedingungen eingehalten worden sind. Es wäre wünschenswert, die Bedingungen, denen Produkte beim Transport und/oder der Lagerung unterliegen, in Erfahrung bringen zu können.

Dies wird durch die Gegenstände der vorliegenden Erfindung erreicht.
Ein erster Gegenstand der vorliegenden Erfindung ist ein aktives Funketikett,
wobei das Funketikett als ein flexibler Folienverbund ausgeführt ist,
wobei das Funketikett eine eindeutige Kennung umfasst,
wobei das Funketikett so ausgestaltet ist, dass es mit einer Verpackung eines Produkts verbunden werden kann,
wobei das Funketikett einen elektrischen Leiter umfasst, wobei der elektrische Leiter so angeordnet ist, dass der Leiter unterbrochen wird, wenn die Verpackung geöffnet wird.
wobei das Funketikett mindestens einen Sensor umfasst, wobei der mindestens eine Sensor einen Verpackungszustand erfasst,
wobei der Sensor konfiguriert ist, den Verpackungszustand "ungeöffnete Verpackung" für den Fall zu erfassen, dass der elektrische Leiter nicht unterbrochen ist, und den Verpackungszustand "geöffnete Verpackung" für den Fall zu erfassen, dass der elektrische Leiter unterbrochen ist,
wobei das Funketikett konfiguriert ist, in zeitlichen Abständen die eindeutige Kennung und die erfasste
Zustandsinformation zu dem Verpackungszustand über ein Mobilfunknetz an einen Sendeempfänger zu versenden.

Ein weiterer Gegenstand der vorliegenden Erfindung ist ein Produkt umfassend eine Verpackung, wobei die Verpackung mit einem aktiven Funketikett verbunden ist,
wobei das Funketikett als ein flexibler Folienverbund ausgeführt ist,
wobei das Funketikett eine eindeutige Kennung umfasst,
wobei das Funketikett einen elektrischen Leiter umfasst, wobei der elektrische Leiter so angeordnet ist, dass der Leiter unterbrochen wird, wenn die Verpackung geöffnet wird,
wobei das Funketikett mindestens einen Sensor umfasst, wobei der mindestens eine Sensor einen Verpackungszustand erfasst,
wobei der Sensor konfiguriert ist, den Verpackungszustand "ungeöffnete Verpackung" für den Fall zu erfassen, dass der elektrische Leiter nicht unterbrochen ist, und den Verpackungszustand "geöffnete Verpackung" für den Fall zu erfassen, dass der elektrische Leiter unterbrochen ist,
wobei das Funketikett konfiguriert ist, in zeitlichen Abständen die eindeutige Kennung und die erfasste

Zustandsinformation zu dem Verpackungszustand über ein Mobilfunknetz an einen Sendeempfänger zu versenden.

Ein weiterer Gegenstand der vorliegenden Erfindung ist ein System umfassend
- mindestens ein aktives Funketikett,
- mindestens einen Sendeempfänger,
- ein Computersystem und
- eine Datenbank

wobei das Funketikett als ein flexibler Folienverbund ausgeführt ist,
wobei das mindestens eine Funketikett eine eindeutige Kennung umfasst,
wobei das mindestens eine Funketikett so ausgestaltet ist, dass es mit einer Verpackung eines Produkts verbunden werden kann,
wobei das Funketikett einen elektrischen Leiter umfasst, wobei der elektrische Leiter so angeordnet ist, dass der Leiter unterbrochen wird, wenn die Verpackung geöffnet wird,
wobei das mindestens eine Funketikett mindestens einen Sensor umfasst, wobei der mindestens eine Sensor einen Verpackungszustand erfasst,
wobei der Sensor konfiguriert ist, den Verpackungszustand "ungeöffnete Verpackung" für den Fall zu erfassen, dass der elektrische Leiter nicht unterbrochen ist, und den Verpackungszustand "geöffnete Verpackung" für den Fall zu erfassen, dass der elektrische Leiter unterbrochen ist,
wobei das mindestens eine Funketikett konfiguriert ist, in zeitlichen Abständen die eindeutige Kennung und die erfasste Zustandsinformation zu dem Verpackungszustand an den mindestens einen Sendeempfänger zu versenden,
wobei der mindestens eine Sendeempfänger konfiguriert ist, die eindeutige Kennung und die Zustandsinformation von dem mindestens einen Funketikett zu empfangen,
wobei der mindestens eine Sendeempfänger konfiguriert ist, eine Ortsinformation zu ermitteln,
wobei der mindestens eine Sendeempfänger konfiguriert ist, die eindeutige Kennung, die Zustandsinformation und die Ortsinformation über ein Netzwerk an das Computersystem zu übermitteln,
wobei das Computersystem konfiguriert ist, die eindeutige Kennung, die Zustandsinformation und die Ortsinformation vom Sendeempfänger zu empfangen,
wobei das Computersystem konfiguriert ist, anhand der eindeutigen Kennung ein Produkt in einer Datenbank zu identifizieren,
wobei das Computersystem konfiguriert ist, für das identifizierte Produkt die Ortsinformation als Standort des Produkts zu speichern, und
wobei das Computersystem konfiguriert ist, für das identifizierte Produkt die Zustandsinformation als Verpackungszustand zu speichern.

Ein weiterer Gegenstand der vorliegenden Erfindung ist ein Verfahren umfassend die Schritte
- Verbinden eines aktiven Funketiketts mit einer Verpackung eines Produkts,
   - wobei das Funketikett als ein flexibler Folienverbund ausgeführt ist,
   - wobei das Funketikett eine eindeutige Kennung umfasst,
   - wobei das Funketikett einen elektrischen Leiter umfasst, wobei der elektrische Leiter so angeordnet ist, dass der Leiter unterbrochen wird, wenn die Verpackung geöffnet wird.
   - wobei das Funketikett mindestens einen Sensor umfasst, wobei der mindestens eine Sensor einen Verpackungszustand erfasst,
   - wobei der Sensor konfiguriert ist, den Verpackungszustand "ungeöffnete Verpackung" für den Fall zu erfassen, dass der elektrische Leiter nicht unterbrochen ist, und den Verpackungszustand "geöffnete Verpackung" für den Fall zu erfassen, dass der elektrische Leiter unterbrochen ist,
   - wobei das Funketikett konfiguriert ist, in zeitlichen Abständen die eindeutige Kennung und die erfasste Zustandsinformation zu dem Verpackungszustand über ein Mobilfunknetz an einen Sendeempfänger zu versenden,
- Erfassen eines Verpackungszustandes durch das Funketikett.
- Übermitteln der eindeutigen Kennung und einer Zustandsinformation zu dem Verpackungszustand an einen Sendeempfänger durch das Funketikett über ein Mobilfunknetz,
- Ermitteln einer Ortsinformation durch den Sendeempfänger,
- Übermitteln der eindeutigen Kennung, der Zustandsinformation und der Ortsinformation über ein Netzwerk an ein Computersystem durch den Sendeempfänger,
- Identifizieren eines Produkts anhand der eindeutigen Kennung durch das Computersystem,
- Speichern der Ortsinformation als Standort des identifizierten Produkts in einer Datenbank,
- Speichern der Zustandsinformation als Verpackungszustand des identifizierten Produkts in der Datenbank.

Die Erfindung wird nachstehend näher erläutert, ohne zwischen den Erfindungsgegenständen zu unterscheiden. Die nachfolgenden Erläuterungen sollen vielmehr für alle Erfindungsgegenstände in analoger Weise gelten, unabhängig davon, in welchem Kontext sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Gemäß der vorliegenden Erfindung werden Verpackungen von Produkten mit einem aktiven Funketikett ausgestattet.

Bei dem Produkt kann es sich um einen beliebigen Gegenstand (ein Sachgut) handeln, der kommerziell angeboten und verkauft werden kann.

Vorzugsweise handelt es sich bei dem Produkt um einen Verbrauchsartikel oder ein Verbrauchmaterial, der/das von einem Nutzer (Endkunde) für einen definierten Verwendungszweck eingesetzt und dabei "verbraucht" wird, d.h. in einen Zustand überführt wird, in dem er/es nicht mehr für den ursprünglichen Verwendungszweck genutzt werden kann, so dass der Nutzer ein neues Produkt erwerben muss. Vorzugsweise handelt es sich um ein Produkt, das nicht zur unmittelbaren Verwendung durch einen Nutzer bestimmt ist, sondern eine gewisse Zeit gelagert werden kann, bevor es eingesetzt wird. Die Lagerungszeit beträgt vorzugsweise mindestens mehrere Wochen bis mehrere Jahre (z.B. 6 Monate oder 9 Monate oder 1 Jahr oder 18 Monate, oder 2 Jahre oder 3 Jahre oder dergleichen).

Beispiele für Produkte im Sinne der vorliegenden Erfindung sind Arzneimittel, Pflanzenschutzmittel, Saatgut, Kosmetika, Reinigungsmittel und dergleichen. Vorzugsweise handelt es sich bei dem Produkt um ein Pflanzenschutzmittel (z.B. ein Herbizid, ein Insektizid oder ein Fungizid) oder Saatgut.

Das Produkt befindet sich in einer Verpackung. Die Verpackung kann eingesetzt werden, um das Produkt in einen transportablen Zustand zu bringen und/oder es vor Umwelteinflüssen, die dem Produkt schaden können (z.B. Feuchtigkeit, Luftsauerstoff, Licht und dergleichen), zu schützen.

Beispiele für Verpackungen sind Behälter, Kisten, Kartons (Kartonagen), Schachteln, Umschläge, Folien, Blister, Kanister, Flaschen, Tonnen, Säcke, Beutel, Gebinde und dergleichen.

Die Verpackung ist/wird mit einem aktiven Funketikett ausgestattet. Der Begriff "Etikett" weist darauf hin, dass das Funketikett eine flächige Ausdehnung aufweist. Flächige Ausdehnung bedeutet, dass sich das Funketikett in drei Raumrichtungen (z.B. in einem kartesischen Koordinatensystem) erstreckt, wobei die Ausmaße in zwei Raumrichtungen um ein Vielfaches größer sind als die Ausmaße in die dritte Raumrichtung. Die Ausmaße in die Raumrichtungen können als Länge, Breite und Dicke bezeichnet werden, wobei die Länge das maximale Ausmaß in eine erste Raumrichtung, die Breite das maximale Ausmaß in eine zweite Raumrichtung und die Dicke das maximale Ausmaß in die dritte Raumrichtung angeben. Vorzugsweise beträgt die Länge das 0,1fache bis 10fache der Breite und die Dicke das mindestens 50fache, vorzugsweise das mindestens 100fache der Länge oder der Breite. Die Fläche, die durch die Länge und die Breite definiert werden, wird in dieser Beschreibung auch als Grundfläche bezeichnet. Üblicherweise liegt die Größe der Grundfläche im Bereich von 10 cm² bis 200 cm².

Der Begriff "aktives Funketikett" bedeutet, dass das Funketikett über Mittel zur Versorgung des Funketiketts mit elektrischer Energie verfügt.

Die elektrische Energie dient der elektrischen Versorgung des Funketiketts, damit dieses seine erfindungsgemäßen Funktionen ausüben kann. Dabei kann es sich beispielsweise um eine Batterie oder einen Akkumulator handeln. In einer bevorzugten Ausführungsform handelt es sich bei den Mitteln zur Energieversorgung um eine druckbare Batterie, wie sie beispielhaft beschrieben ist in US2010021799A, EP3104433A1, KR20170085256A, KR20170098004A und US2010081049A. In einer Ausführungsform der vorliegenden Erfindung ist die Batterie biologisch abbaubar (siehe z.B. US2016351936A).

Das Funketikett kann ferner so ausgestaltet sein, dass es elektrische Energie aus der Umgebung des Funketiketts gewinnt. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und durch das Funketikett genutzt oder "geerntet" werden. Diese Art der elektrischen Energieerzeugung ist als *Energy Harvesting* bekannt. Mit *Energy Harvesting* werden im Bereich der Elektronik Verfahren bezeichnet, mit denen kleinste Mengen frei verfügbarer Energie aus der Umgebung gewonnen und gespeichert werden können. Diese Technik ermöglicht es, Funketiketten während der gesamten Lebensdauer mit Energie zu versorgen, sodass sie nach der Installation nicht mehr gewartet werden müssen. *Energy Harvesting* Systeme umfassen üblicherweise einen Energiewandler, eine Energiemanagementeinheit mit einem Energiespeicher, der üblicherweise ein Kondensator ist. Der Energiewandler, auch Mikrogenerator genannt, wandelt Energie aus der Umgebung in elektrische Energie um. Für die Umwandlung können beispielsweise der piezoelektrische Effekt, der thermoelektrische Effekt oder der photoelektrische Effekt genutzt werden. Weitere Details sind im Stand der Technik beschrieben (siehe z.B. http://www.harvesting-energy.de/ und die dort aufgeführten Publikationen).

Üblicherweise wird das Funketikett mit der Verpackung verbunden, nachdem die Verpackung mit dem Produkt befüllt und verschlossen worden ist. Es ist aber auch denkbar, dass das Funketikett mit der Verpackung verbunden wird, bevor das Produkt in die Verpackung gefüllt wird und/oder die Verpackung verschlossen wird.

Denkbar ist auch, dass das Funketikett ein Bestandteil der Verpackung ist.

Das Funketikett kann zum Beispiel auf der Verpackung aufgedruckt sein oder mit der Verpackung zu einem Verbund zusammengefügt (z.B. laminiert) sein.

Das Funketikett kann sich außerhalb der Verpackung befinden - das ist der Bereich der Verpackung, der keinen Kontakt zum Produkt hat aber Kontakt zur Außenwelt (Umwelt) hat. Das Funketikett kann sich aber auch innerhalb der Verpackung befinden - das ist der Bereich der Verpackung, der in Kontakt mit dem Produkt steht. Denkbar ist auch, dass das Funketikett zwischen zwei Verpackungen eingebracht ist.

Das Funketikett kann an oder in einem Verschluss der Verpackung (z.B. an oder in einem Schraubverschluss) angebracht/eingebracht sein.

In einer Ausführungsform der vorliegenden Erfindung ist das Funketikett, sobald es mit der Verpackung verbunden worden ist, irreversibel mit der Verpackung verbunden, d.h. der Versuch der Entfernung des Funketiketts von der Verpackung würde zu einer Zerstörung des Funketiketts führen, wobei "Zerstörung des Funketiketts" bedeutet, dass das Funketikett nicht mehr erfindungsgemäß einsetzbar ist. Eine solche irreversible Verbindung kann beispielsweise durch eine Klebeverbindung zwischen Funketikett und Verpackung erreicht werden, wobei die Kraft zur Überwindung der Klebeverbindung und damit zum Ablösen des Funketiketts von der Verpackung größer ist, als die Kraft, die einzelne Komponenten des Funketiketts zusammenhält, so dass ein Ablöseversuch dazu führt, dass einzelne Komponenten des Funketiketts voneinander getrennt werden.

In einer anderen Ausführungsform der vorliegenden Erfindung ist das Funketikett so ausgeführt, dass es wiederverwendet werden kann. Es kann also von der Verpackung wieder gelöst werden und mit einer anderen Verpackung verbunden werden.

Das Funketikett weist eine eindeutige Kennung auf. Die eindeutige Kennung kann eine Nummer oder ein alphanumerischer Code oder ein Binärcode oder dergleichen sein. Die eindeutige Kennung dient zur Identifizierung des Funketiketts bzw. zur Identifizierung des Produkts, mit dem das Funketikett über die Verpackung verbunden ist. Üblicherweise ist eine Produktdatenbank Bestandteil des erfindungsgemäßen Systems. Über die eindeutige Kennung können Informationen (Produktname, Produktart, Hersteller, Losnummer, Herstelldatum, Zusammensetzung, Verwendungshinweise, Verfallsdatum, Mindesthaltbarkeitsdatum und dergleichen) zum jeweiligen Produkt aus der Datenbank abgefragt werden.

Die Kennung ist in einem Datenspeicher des Funketiketts gespeichert. Vorzugsweise handelt es sich um einen Halbleiterspeicher. Der Datenspeicher für die eindeutige Kennung ist üblicherweise ein WORM-Speicher (WORM: *write once, read many,* engl. für "schreibe einmal, lese vielfach"). Es ist denkbar, dass das Funketikett vor der Verbindung mit der Verpackung bereits über eine eindeutige Kennung verfügt. Es ist aber auch denkbar, dass die eindeutige Kennung erst nach der Verbindung des Funketiketts mit der Verpackung in den Datenspeicher eingeschrieben wird. Eine Steuereinheit des Funketiketts kann auf den Datenspeicher zugreifen und die eindeutige Kennung auslesen. Die Steuereinheit kann die eindeutige Kennung mittels einer Sendeeinheit des Funketiketts versenden.

Die eindeutige Kennung ist sowohl in einem Datenspeicher des Funketiketts als auch in einem separaten Produktdatenspeicher gespeichert, so dass die eindeutige Kennung und das Produkt miteinander in Beziehung stehen und bei Kenntnis der eindeutigen Kennung Informationen zum Produkt aus der Produktdatenbank gewonnen werden können.

Das Funketikett verfügt über mindestens einen Sensor. Ein "Sensor" ist ein technisches Bauteil, das bestimmte physikalische oder chemische Eigenschaften und/oder die stoffliche Beschaffenheit seiner Umgebung qualitativ oder als Messgröße quantitativ erfassen kann. Die Eigenschaften werden mittels physikalischer oder chemischer Effekte erfasst und in weiterverarbeitbare, meist elektrische Signale umgeformt. Bevor die elektrischen Signale über Funk an einen Sendeempfänger übermittelt werden, werden sie üblicherweise noch digitalisiert.

Der mindestens eine Sensor erfasst Messwerte, die den Zustand der Verpackung und/oder des Produkts charakterisieren. Über den mindestens einen Sensor wird also eine Zustandsinformation generiert.

In einer bevorzugten Ausführungsform umfasst das Funketikett einen Sensor, der erfasst, ob die Verpackung ungeöffnet ist oder ob sie geöffnet ist / geöffnet worden ist.

Der Sensor erfasst den Verpackungszustand (ungeöffnet / geöffnet) vorzugsweise anhand einer physikalischen Eigenschaft, die sich ändert, wenn die Verpackung geöffnet worden ist und/oder geöffnet wird. Die physikalische Eigenschaft, die sich durch Öffnen der Verpackung ändert, kann zum Beispiel eine elektrische Leitfähigkeit (bzw. ein elektrischer Widerstand) und/oder eine elektrische Kapazität und/oder eine Induktivität oder dergleichen sein.

Es ist denkbar, dass der Sensor so ausgestaltet ist, dass er in definierten Zeitabständen prüft, ob die Verpackung geöffnet oder ungeöffnet ist.

In einer Ausführungsform der vorliegenden Erfindung verfügt das Funketikett über einen oder mehrere elektrische Leiter (z.B. einen oder mehrere elektrisch leitfähige Drähte und/oder elektrische Leiterbahnen), die so angebracht sind, dass beim Öffnen der Verpackung mindestens ein elektrischer Leiter irreversibel unterbrochen wird, so dass durch diesen elektrischen Leiter kein elektrischer Strom mehr fließen kann. Der Sensor erkennt einen unterbrochenen elektrischen Leiter daran, dass sich die Leitfähigkeit geändert hat. Dieses Prinzip ist beispielsweise beschrieben in WO9604881A1 oder DE19516076A1. Der elektrischen Leiter fungiert im vorliegenden Fall als Indikator; das Öffnen der Verpackung führt zu einer irreversiblen Veränderung des Indikators: der elektrischen Leiter wird unterbrochen.

Das Funketikett kann über einen Datenspeicher verfügen, in dem die Information über den Verpackungszustand gespeichert ist. Es ist denkbar, dass der Sensor so ausgestaltet ist, dass er in definierten Zeitabständen prüft, ob die Verpackung noch ungeöffnet ist; sobald sie geöffnet ist, wird der entsprechende (neue) Verpackungszustand in einem Datenspeicher gespeichert. Bevor das Funketikett eine Zustandsinformation zu dem Verpackungszustand an einen Sendeempfänger übermittelt, liest eine Steuereinheit, die Bestandteil des Funketiketts ist, den Verpackungszustand aus dem Datenspeicher aus. Die Erfassung des Verpackungszustands und die Versendung der Zustandsinformation sind in einem solchen Fall entkoppelt. Das Funketikett kann so konfiguriert sein, dass es den Verpackungszustand so lange mittels eines Sensors zu definierten Zeitpunkten abfragt, bis der Sensor registriert, dass die Verpackung geöffnet wird/worden ist. Danach ist keine weitere Abfrage des Verpackungszustands über einen Sensor mehr erforderlich.

Es ist denkbar, dass neben dem Verpackungszustand "geöffnet/ungeöffnet" weitere Verpackungszustände von einem oder von mehreren Sensoren erfasst werden, wie beispielsweise die Verpackung wurde gequetscht oder nicht gequetscht, die Verpackung war einer Temperatur ausgesetzt, die oberhalb eines definierten Temperaturmaximalwerts oder unterhalb eines definierten Temperaturminimalwerts liegt, die Verpackung war einer (Luft-)feuchte ausgesetzt, die oberhalb eines definierten Feuchtemaximalwerts oder unterhalb eines definierten Feuchteminimalwerts liegt, die Verpackung war einem Druck ausgesetzt, der oberhalb eines definierten Druckmaximalwerts oder unterhalb eines definierten Druckminimalwerts liegt, die Verpackung war Beschleunigungskräften ausgesetzt, die oberhalb eines definierten Beschleunigungsmaximalwerts liegen, und dergleichen. Ein solcher Verpackungszustand kennzeichnet Umweltbedingungen, denen eine Verpackung vor dem Zeitpunkt der Erfassung des jeweiligen Verpackungszustands ausgesetzt war. Üblicherweise werden zur Erfassung von Verpackungszuständen Sensoren eingesetzt, bei denen eine Komponente durch Umweltbedingungen oberhalb und/oder unterhalb von definierten Grenzwerten (Maximalwerte/Minimalwert) irreversibel verändert wird. Eine solche Komponente wird in dieser Beschreibung auch als Indikator bezeichnet. Der Indikator zeigt also an, ob der Indikator einer definierten Umweltbedingung ausgesetzt war.

Es können ferner ein oder mehrere Sensoren vorhanden sein, die Umweltbedingungen erfassen, denen die Verpackung und/oder das Produkt und/oder das Funketikett zum Zeitpunkt der Messwerterfassung ausgesetzt ist/sind. Beispiele solcher Umweltbedingungen sind: Temperatur, (Luft-)Druck, (Luft-)Feuchtigkeit, Beschleunigungskräfte, Exposition gegenüber elektromagnetischer Strahlung eines definierten Wellenlängenbereichs und/oder dergleichen.

Ziel der Erfassung solcher Umweltbedingungen und/oder Verpackungszustände kann es sein, nachzuverfolgen, ob in der Vertriebskette - von der Herstellung bis zum Endnutzer - stets die für das Produkt erforderlichen Transport- und/oder Lagerbedingungen eingehalten worden sind. Ziel der Erfassung von Umweltbedingungen und/oder Verpackungszuständen kann ferner sein, den Transport und/oder die Lagerbedingungen zu verfolgen, damit stets bekannt ist, wo sich ein bestimmtes Produkt gerade befindet und/oder in welchem Zustand es sich befindet.

Es ist denkbar, dass das Produkt gekühlt werden muss, damit es nicht verdirbt. In einem solchen Fall kann ein Temperatursensor zu definierten Zeitpunkten die Temperatur erfassen. Liegt ein gemessener Temperaturwert oberhalb einer definierten Temperaturmaximalwerts, wird offenkundig, dass die Kühlkette aktuell nicht eingehalten wird. Es kann aber auch ein Sensor verwendet werden, der einen Temperatur-Indikator umfasst, der durch eine Temperatur oberhalb eines definierten Temperaturmaximalwerts irreversibel verändert wird. Der Sensor prüft bei der Erfassung, ob sich der Temperatur-Indikator verändert hat (weil die Temperatur in der Vergangenheit oberhalb des definierten Temperaturmaximalwerts lag) oder ob er sich nicht verändert hat.

Es ist denkbar, dass das Produkt nicht frostsicher ist und damit keiner Temperatur unterhalb eines Temperaturminimalwerts ausgesetzt werden sollte. In einem solchen Fall kann ein Temperatursensor zu definierten Zeitpunkten die Temperatur erfassen. Liegt ein gemessener Temperaturwert unterhalb eines definierten Temperaturminimalwerts, wird offenkundig, dass das Produkt zu tiefen Temperaturen ausgesetzt war und Schaden genommen haben könnte. Es kann aber auch ein Sensor verwendet werden, der einen Temperatur-Indikator umfasst, der durch eine Temperatur unterhalb eines definierten Temperaturminimalwerts irreversibel verändert wird. Der Sensor prüft bei der Erfassung, ob sich der Temperatur-Indikator verändert hat (weil die Temperatur in der Vergangenheit unterhalb des definierten Grenzwerts lag) oder ob er sich nicht verändert hat.

Es ist denkbar, dass das Produkt nicht feucht werden darf, da es sonst Schaden nimmt oder Qualitätseinbußen zu befürchten sind; in einem solchen Fall kann ein Feuchtesensor zu definierten Zeitpunkten die Feuchte (z.B. Luftfeuchtigkeit) erfassen. Liegt ein gemessener Feuchtewert oberhalb eines definierten Feuchtemaximalwerts, wird offenkundig, dass die aktuelle Feuchte zu hoch ist und Maßnahmen zur Reduzierung der Feuchte ergriffen werden sollten. Es kann aber auch ein Sensor verwendet werden, der einen Feuchte-Indikator umfasst, der durch eine Feuchte oberhalb eines definierten Feuchtemaximalwerts irreversibel verändert wird. Der Sensor prüft bei der Erfassung, ob sich der Feuchte-Indikator verändert hat (weil die Feuchte in der Vergangenheit oberhalb des definierten Grenzwerts lag) oder ob er sich nicht verändert hat.

Es ist denkbar, dass ein Produkt empfindlich gegenüber Beschleunigungskräften ist, beispielsweise deswegen, weil es zerbrechlich ist. In einem solchen Fall kann ein Beschleunigungssensor zu definierten Zeitpunkten die Beschleunigungskräfte erfassen. Liegt ein gemessener Wert für die aktuell auf den Sensor einwirkenden Beschleunigungskräfte oberhalb eines definierten Beschleunigungsmaximalwerts, wird offenkundig, dass Gefahr besteht, dass das Produkt geschädigt wird. Es kann aber auch ein Sensor verwendet werden, der einen Beschleunigungs-Indikator umfasst, der durch Beschleunigungskräfte oberhalb eines definierten Beschleunigungsmaximalwerts irreversibel verändert wird. Der Sensor prüft bei der Erfassung, ob sich der Beschleunigungs-Indikator verändert hat (weil die Beschleunigungskräfte in der Vergangenheit oberhalb des definierten Grenzwerts lagen) oder ob er sich nicht verändert hat.

Es ist denkbar, dass ein Produkt lichtempfindlich ist. In einem solchen Fall kann ein Lichtintensitätssensor zu definierten Zeitpunkten die Intensität elektromagnetischer Strahlung eines definierten Wellenlängenbereichs (z.B. im Bereich des sichtbaren Lichts (380 nm bis 780 nm) und/oder im Bereich des ultravioletten Lichts (z.B. UV-A (380 nm bis 315 nm) und/oder UV-B (315 nm bis 280 nm) oder ein anderer Wellenlängenbereich oder mehrere Wellenlängenbereiche) erfassen. Liegt ein gemessener Wert für die aktuell auf den Sensor einwirkende Lichtintensität oberhalb eines definierten Lichtintensitätsmaximalwerts, wird offenkundig, dass das Produkt aktuell einer zu hohen Lichtintensität ausgesetzt ist; es sollten Maßnahmen zur Reduzierung der Lichtintensität ergriffen werden. Es kann aber auch ein Sensor verwendet werden, der einen Licht-Indikator umfasst, der durch eine Lichtintensität oberhalb eines definierten Lichtintensitätsmaximalwerts irreversibel verändert wird. Der Sensor prüft bei der Erfassung, ob sich der Licht-Indikator verändert hat (weil die Lichtintensität in der Vergangenheit oberhalb des definierten Grenzwerts lag) oder ob er sich nicht verändert hat.

Zur Messung von Temperatur, Feuchte, Druck, Beschleunigung, Lichtintensität und anderen Umweltbedingungen existieren eine Vielzahl kommerziell verfügbarer Sensoren und Indikatoren.

Umweltbedingungen können mit einem oder mehreren Sensoren zu definierten Zeitpunkten erfasst werden. "Definierter Zeitpunkt" bedeutet, dass der Zeitpunkt, zu dem eine Messwerterfassung erfolgt, klaren Regeln folgt. Es ist beispielsweise denkbar, dass eine Messwerterfassung zu vorher festgelegten Zeitpunkten erfolgt, wie z.B. einmal am Tag um 12 Uhr mittags, oder jede volle Stunde oder dergleichen. Unter einem "definierten Zeitpunkt" soll aber auch das Eintreten eines definierten Ereignisses verstanden werden, dass eine Messwerterfassung triggert, wie zum Beispiel ein äußerer (elektromagnetischer) Impuls, eine Erschütterung und dergleichen.

Das aktive Funketikett kann ferner über einen Zeitmesser verfügen. Das Funketikett kann den jeweiligen Zeitpunkt bestimmen, zu dem ein Messwert erfasst und/oder eine Information an den Sendeempfänger versendet wird. Der jeweilige Zeitpunkt kann als Zeitinformation ebenfalls an den Sendeempfänger übermittelt werden.

Es ist denkbar, dass die Messwerterfassung und die Versendung von Informationen über ein Netzwerk an einen Sendeempfänger miteinander gekoppelt sind, zum Beispiel in der Weise, dass vor einer Versendung von Informationen eine Messwerterfassung veranlasst wird und der/die erfassten Messwerte(e) dann versandt wird/werden. Denkbar ist aber auch eine Entkoppelung; für diesen Fall weist das Funketikett einen Datenspeicher auf, in dem Messwerte gespeichert werden können. Messwerte werden zu definierten Zeitpunkten erfasst und in dem Datenspeicher gespeichert. Vor einer Versendung von Informationen ermittelt eine Steuereinheit, die Bestandteil des Funketiketts ist, die gespeicherten Messwerte und versendet sie oder eine abgeleitete Information an den Sendeempfänger.

Das gleiche gilt für die Ermittlung und Versendung eines oder mehrerer Verpackungszustände. Die Erfassung von Messwerten zur Ermittlung eines Verpackungszustands erfolgt zu definierten Zeitpunkten und kann mit der Versendung der Zustandsinformation gekoppelt sein oder davon entkoppelt sein. Es ist denkbar, dass Messwerte unmittelbar vor Versenden erfasst werden; es ist denkbar, dass Messwerte erfasst, in einem Datenspeicher gespeichert werden und vor Versenden der Messwerte ausgelesen werden.

Das Funketikett ist so ausgestaltet, dass es Informationen (eindeutige Kennung, Zustandsinformation zum Verpackungszustand, ggf. Informationen zu Umweltbedingungen, ggf. Zeitinformation) über ein Mobilfunknetz an einen Sendeempfänger versenden kann.

Der Begriff Mobilfunknetz bezeichnet die technische Infrastruktur, auf der die Übertragung von Signalen für den Mobilfunk stattfindet. Ein Mobilfunknetz ist ein Kommunikationsnetz, in dem die Verbindung einer mobilen Funkeinheit mit einem ortfesten Transceiver drahtlos erfolgt. Das Netzwerk ist über als Zellen bezeichnete Gebiete verteilt, die jeweils von mindestens einem ortsfesten Transceiver bedient werden, normalerweise jedoch von drei Zellstandorten oder Basis-Transceiver-Stationen. Diese Basisstationen versorgen die Zelle mit der Netzabdeckung, die zur Übertragung von Sprache, Daten und anderen Arten von Inhalten verwendet werden kann.

Die Übermittlung von Informationen vom Funketikett an einen Sendeempfänger erfolgt üblicherweise über ein Mobilfunknetz, das auf dem GSM-, GPRS-, 2G-, 3G-, LTE-, 4G-, 5G-Standard oder einem anderen Standard basiert.

Dazu verfügt das Funketikett über eine Sendeeinheit umfassend ein Modem und eine Antenne zum Versenden von Informationen über ein GSM-, GPRS-, 2G-, 3G-, LTE-, 4G-, 5G-Mobilfunknetzwerk oder über ein anderes Mobilfunknetzwerk.

Funketiketten und Sendeempfänger sind vorzugsweise aufeinander abgestimmt, um möglichst wenig Energie für die Übertragung von Informationen vom Funketikett zum Sendeempfänger zu verbrauchen. Das Funketikett ist vorzugsweise so konfiguriert, dass es sich die überwiegende Zeit in einem Ruhemodus befindet. Zu definierten Zeitpunkten wird es aktiv und versendet Informationen an einen Sendeempfänger in der Umgebung (in Reichweite) des Funketiketts.

Die Versendung von Informationen kann beispielsweise einmal in der Stunde oder einmal am Tag oder unregelmäßig erfolgen.

Es ist denkbar, dass das Funketikett zu regelmäßigen oder unregelmäßigen Zeitpunkten Informationen versendet. Es ist denkbar, dass das Funketikett durch ein Ereignis aktiviert wird und dann Informationen versendet. Das Ereignis kann durch Umweltbedingungen und/oder durch den Sendeempfänger und/oder durch einen Menschen ausgelöst werden. Es ist denkbar, dass das Funketikett durch Licht bei Erreichen einer Mindesthelligkeit und/oder durch Wärme bei Erreichen einer Mindesttemperatur aktiviert wird. Ferner ist denkbar, dass das Funketikett durch eine Erreichen einer definierten Wärmesumme oder einer definierten Lichtsumme (Energiemenge) aktiviert wird.

Der Sendeempfänger (Transceiver) ist so ausgestaltet, dass er die von einem Funketikett oder mehreren Funketiketten versandten Informationen (eindeutige Kennung, Zustandsinformation zum Verpackungszustand, ggf. Informationen zu Umweltbedingungen, ggf. Zeitpunktinformation) über ein Mobilfunknetz von dem Sendeempfänger empfangen kann.

Bei dem Sendeempfänger handelt es sich vorzugsweise um eine Mobilfunk-Basisstation, die Informationen von einem oder mehreren Funketiketten in der Reichweite der Mobilfunk-Basisstation empfängt.

Der Sendeempfänger ist ferner konfiguriert, eine Ortsinformation zu ermitteln. Die Ermittlung der Ortsinformation dient der Zuordnung des Funketiketts bzw. des Produkts, mit dem das Funketikett verbunden ist, zu einem Standort.

Eine Standortbestimmung mit einer vergleichsweise hohen Genauigkeit bietet ein Satellitennavigationssystem. Bekannte Satellitennavigationssysteme sind beispielsweise NAVSTAR GPS, GLONASS, Galileo oder Beidou. Zur Standortbestimmung mit einem Satellitennavigationssystem kann das Funketikett mit einem Sensor zum Empfang von Signalen von einer Mehrzahl an Satelliten des Satellitennavigationssystems ausgestattet sein. Eine solche Lösung zur Standortsbestimmung benötigt jedoch vergleichsweise viel Energie und bedeutet zudem zusätzliche Bauteilkosten für die Funketiketten. Ferner ist für viele Anwendungen keine genaue Standortermittlung nötig sondern es reicht zu wissen, in welchem Gebiet sich ein Produkt befindet.

Der Sendeempfänger kann mit einem Sensor zum Empfang von Signalen von einer Mehrzahl an Satelliten des Satellitennavigationssystems ausgestattet sein. In der Regel ist der Sendeempfänger jedoch ortsfest installiert und sein Standort ändert sich somit nicht. Bei einem ortsfest stationierten Sendeempfänger ist der Standort üblicherweise bekannt.

Die Ortsinformation kann daher aus der (Mobil-)Funkzelle, in der sich der Sendeempfänger befindet, abgeleitet werden.

Im Mobilfunk beruht die einfachste Art der Standortbestimmung darauf, dass die Zelle, in der sich eine Sendeeinheit befindet, bekannt ist. Da beispielsweise ein eingeschaltetes Mobilfunktelefon mit einer Basisstation in Verbindung steht, lässt sich die Position des Mobilfunktelefons zumindest einer Mobilfunkzelle (Cell-ID) zuweisen.

Analog kann die Position des Funketiketts mit der Mobilfunkzelle gleichgesetzt werden, mit der der Sendeempfänger verbunden ist. Mit Hilfe von GSM (Global System for Mobile Communications) kann der Standort eines Funketiketts auf mehrere hundert Meter genau bestimmt werden. In Städten kann der Standort auf 100 bis 500 m genau bestimmt werden; in ländlichen Gegenden erhöht sich der Radius auf 10 km oder mehr. Wird die Information über die Cell-ID mit dem TA-Parameter (TA: Timing Advance) kombiniert, dann kann die Genauigkeit erhöht werden. Je höher dieser Wert ist, desto weiter weg ist ein Funketikett von der Basisstation. Mit dem EOTD-Verfahren (EOTD: Enhanced Observed Time Difference) lässt sich eine Sendeeinheit noch genauer orten. Dabei werden die Laufzeitunterschiede der Signale zwischen dem Funketikett und mehreren Empfangseinheiten bestimmt. Weitere Möglichkeiten der Positionsbestimmung sind im Stand der Technik beschrieben (siehe z.B. DE10029137A1, DE102010041548A1, DE102012214203A1, DE102015121384A1, DE102016225886A1, US2015119086A1).

In einer Ausführungsform erfolgen die Übermittlung von Informationen und die Standortbestimmung über ein Low Power Wide Area Network (LPWAN), wie beispielsweise das Sigfox-Netzwerk. Ein LPWAN ist speziell auf kleine Datenpakete und einen sehr stromsparenden Betrieb ausgelegt. LPWAN-Basisstationen können über weite Entfernungen kommunizieren, ohne von Störungen beeinträchtigt zu werden. Die Reichweite einer einzelnen Basisstation, die bis zu einer Million Funketiketten verwalten kann, beträgt 3 bis 5 km in Ballungszentren und 30 bis 70 km in ländlichen Gebieten. Bei einem LPWAN werden die Datenpakete von allen Basisstationen im Sendebereich empfangen. Darüber lässt sich die Position eines Funketiketts bestimmen.

Der Sendeempfänger kann ferner konfiguriert sein, eine Zeitinformation zu ermitteln. Bei der Zeitinformation kann es sich um den Zeitpunkt des Empfangs von Informationen von einem Funketikett handeln und/oder um den Zeitpunkt der Ermittlung einer Ortsinformation und/oder der Zeitpunkt des Versendens von Informationen an ein Computersystem.

Der Sendeempfänger verknüpft die empfangenen Informationen (eindeutige Kennung, Zustandsinformation zum Verpackungszustand, ggf. Informationen zu Umweltbedingungen, ggf. Zeitinformation) mit der ermittelten Ortsinformation und ggf. mit der Zeitinformation und versendet alle Daten über ein weiteres kabelloses und/oder kabelgebundenes Netzwerk an ein Computersystem.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

Die Eingaben in das Computersystem erfolgen über Eingabemittel wie beispielsweise eine Tastatur, eine Maus, ein Mikrofon und/oder dergleichen. Als Eingabe soll auch die Auswahl eines Eintrags aus einem virtuellen Menü oder einer virtuellen Liste oder das Anklicken eines Auswahlkästchens und dergleichen verstanden werden.

Ausgaben des Computersystems erfolgen üblicherweise über einen Bildschirm, einen Drucker oder durch Speichern auf einem Datenspeicher.

Mit dem Computersystem können die Daten einer Vielzahl an Funketiketten verwaltet werden. Es ist denkbar, dass mehrere Computersysteme existieren, die z.B. auf verschiedene Länder und/oder geografische Regionen verteilt sind.

Das Computersystem empfängt die Informationen (eindeutige Kennung, Zustandsinformation zum Verpackungszustand, ggf. Informationen zu Umweltbedingungen, Ortsinformation, ggf. Zeitinformation).

Das Computersystem kann konfiguriert sein, eine Zeitinformation zu ermitteln. Bei der Zeitinformation kann es sich zum Beispiel um den Zeitpunkt des Empfangs der Informationen vom Sendeempfänger handeln.

Das Computersystem ist mit einer oder mehreren Produktdatenbanken verbunden (z.B. über ein Netzwerk). Eine solche Datenbank kann auch ein (integraler) Bestandteil des Computersystems sein. Anhand der eindeutigen Kennung identifiziert das Computersystem durch Abfrage in der Datenbank das Produkt, dem die eindeutige Kennung zugeordnet ist.

Das Computersystem ist konfiguriert, die Ortsinformation als Standort des identifizierten Produkts in der Datenbank zu speichern.

Das Computersystem ist konfiguriert, die Zustandsinformation als Verpackungszustand des Produkts in der Datenbank zu speichern.

In einer bevorzugten Ausführungsform ist das Computersystem ferner konfiguriert, für das identifizierte Produkt die Umweltbedingungen, denen das Produkt ausgesetzt war, zu speichern.

Jede Information, die vom Computersystem zu einem identifizierten Produkt in der Datenbank gespeichert wird, kann mit einer Zeitinformation versehen werden. Die Zeitinformation kann der Zeitpunkt sein, zu dem ein Messwert, dem die Information zugrunde liegt, von einem Sensor des Funketiketts erfasst worden ist. Die Zeitinformation kann der Zeitpunkt sein, zu dem das Funketikett die Information an den Sendeempfänger versandt hat. Die Zeitinformation kann der Zeitpunkt sein, zu dem die Information vom Sendeempfänger empfangen worden ist. Die Zeitinformation kann der Zeitpunkt sein, zu dem der Sendeempfänger die Information an das Computersystem versandt hat. Die Zeitinformation kann der Zeitpunkt sein, zu dem das Computersystem die Information empfangen hat.

Speichert das Computersystem eine solche Zeitinformation zum Beispiel zum Standort des Produkts ab, kann ermittelt werden, an welchen Standorten sich das Produkt zu verschiedenen Zeitpunkten befunden hat (Tracking).

Speichert das Computersystem eine solche Zeitinformation zum Beispiel zum Verpackungszustand des Produkts ab, kann ermittelt werden, zu welchem Zeitpunkt / zu welchen Zeitpunkten Änderungen des Verpackungszustands erfolgt sind.

Speichert das Computersystem eine solche Zeitinformation zum Beispiel zu Umweltbedingungen des Produkts ab, kann ermittelt werden, welchen Umweltbedingungen das Produkt zu verschiedenen Zeitpunkten ausgesetzt gewesen ist.

Das Computersystem kann konfiguriert sein, für ein identifiziertes Produkt aus der Datenbank einen Standort zu ermitteln und diesen Standort mit der Ortsinformation zu vergleichen. Bei einer Abweichung kann das Computersystem eine Mitteilung an eine Person übermitteln, zum Beispiel an den Hersteller des Produkts oder den Vertreiber des Produkts. Eine solche Mitteilung kann die Ortsinformation enthalten und die Person somit davon in Kenntnis setzen, dass sich der Standort des Produkts geändert hat.

Das Computersystem kann konfiguriert sein, für ein identifiziertes Produkt aus der Datenbank einen Verpackungszustand zu ermitteln und diesen mit der Zustandsinformation zu vergleichen. Bei einer Abweichung kann das Computersystem eine Mitteilung an eine Person übermitteln, zum Beispiel an den Hersteller des Produkts oder den Vertreiber des Produkts. Eine solche Mitteilung kann die Information enthalten, dass sich der Verpackungszustand geändert hat und die Person über den aktualisierten Verpackungszustand in Kenntnis setzen.

Das Computersystem kann konfiguriert sein, für ein identifiziertes Produkt aus der Datenbank einen (zulässigen) Maximalwert zu ermitteln und diesen mit einer Umweltbedingung, der das Produkt ausgesetzt war, zu vergleichen. Liegt die Umweltbedingung oberhalb des (zulässigen) Maximalwerts, kann das Computersystem eine Mitteilung an eine Person übermitteln, zum Beispiel an den Hersteller des Produkts oder den Vertreiber des Produkts. Eine solche Mitteilung kann die Information enthalten, dass das Produkt einer Umweltbedingung ausgesetzt ist/war, die sich oberhalb eines (zulässigen) Maximalwerts befindet; das Produkt kann Schaden genommen haben; es wäre denkbar, Maßnahmen zu ergreifen, um einen weiteren Schaden zu unterbinden oder das Produkt aus dem Verkehr zu ziehen.

Das Computersystem kann konfiguriert sein, für ein identifiziertes Produkt aus der Datenbank einen (zulässigen) Minimalwert zu ermitteln und diesen mit einer Umweltbedingung, der das Produkt ausgesetzt war, zu vergleichen. Liegt die Umweltbedingung unterhalb des (zulässigen) Minimalwerts, kann das Computersystem eine Mitteilung an eine Person übermitteln, zum Beispiel an den Hersteller des Produkts oder den Vertreiber des Produkts. Eine solche Mitteilung kann die Information enthalten, dass das Produkt einer Umweltbedingung ausgesetzt ist/war, die sich unterhalb eines (zulässigen) Minimalwerts befindet; das Produkt kann Schaden genommen haben; es wäre denkbar, Maßnahmen zu ergreifen, um einen weiteren Schaden zu unterbinden oder das Produkt aus dem Verkehr zu ziehen.

Vorzugsweise sind eine Vielzahl an Funketiketten und Sendeempfängern Bestandteile des erfindungsgemäßen Systems, so dass für eine Vielzahl an Produkteinheiten bekannt ist, wo sie sich befinden und in welchem Zustand sie sich befinden. Anhand dieser Informationen können Produktionsprozesse und/oder Logistik und/oder Lagerhaltung optimiert werden.

In einer Ausführungsform der vorliegenden Erfindung hat der Hersteller der Produkte Zugriff auf das Computersystem und er nutzt die Informationen, um die Herstellung der Produkte zu optimieren, in dem er beispielsweise dann die Herstellung von Produkten initiiert, wenn die Zahl an ungeöffneten Verpackungen, die sich bei Endkunden befinden, unter einen definierten Schwellenwert fällt.

In einer Ausführungsform der vorliegenden Erfindung hat ein Vertreiber der Produkte Zugriff auf den Server und er nutzt die Informationen, um neue Produkte dann zu bestellen und/oder dann in ein definiertes Lager zu transportieren, wenn die Zahl an ungeöffneten Verpackungen, die sich bei Endkunden befinden, unter einen definierten Schwellenwert fällt.

In einer bevorzugten Ausführungsform verfügt das Funketikett über einen optisch lesbaren Code, wie z.B. einen Barcode oder einen Matrixcode (wie z.B. QR-Code oder Data Matrix Code). Der optisch lesbare Code umfasst eine eindeutige Kennung, anhand der das Funketikett und/oder das Produkt und/oder eine Produktcharge und/oder dergleichen eindeutig identifiziert werden kann. Dabei kann es sich um dieselbe eindeutige Kennung handeln, auf die die Steuereinheit des Funketiketts zugreifen kann. Es kann sich aber auch um eine andere (weitere) eindeutige Kennung handeln. Der optische Code kann ferner eine Internetadresse umfassen. Der optisch lesbare Code ist zum Beispiel auf das Funketikett aufgedruckt, eingraviert, eingeätzt, in Form eines Aufklebers an dem Funketikett angebracht oder in anderer Weise mit dem Funketikett verbunden oder in das Funketikett eingebracht.

Der optische Code dient dazu, dem Käufer/Nutzer des Produkts weitere Informationen über das Produkt zur Verfügung zu stellen. Dies geschieht zum Beispiel, indem der Käufer/Nutzer den optisch lesbaren Code mit Hilfe eines mobilen Computersystems wie beispielsweise mit einem Smartphone oder einem Tabletcomputer in das mobile Computersystem einliest. Üblicherweise verfügen mobile Computersysteme über eine Kamera, mit der optische Codes gelesen werden können. Vorzugsweise ist das mobile Computersystem (durch ein installiertes Softwareprogramm (eine "App")) so konfiguriert, dass es auf Basis des eingelesenen optischen Codes eine Internetseite öffnet, auf der dem Käufer/Nutzer Informationen zu dem Produkt präsentiert werden. Dabei kann es sich um Informationen handeln, die spezifisch für den Käufer/Nutzer dieses Produkts gedacht sind. Denkbar ist zum Beispiel die Präsentation einer Mitteilung zu einem Rückruf des Produkts oder Informationen darüber, was zu tun ist, falls das Produkt definierten Umweltbedingungen ausgesetzt war, die eine Qualitätseinbuße bedeuten können.

In einer bevorzugten Ausführungsform erhält der Käufer/Nutzer über das Funketikett eine Mitteilung, dass er den optischen Code einlesen und damit Zugang zu einer Internetseite mit Informationen, die für ihn bereitgestellt worden sind, aufbauen soll. Denkbar ist zum Beispiel, dass das Funketikett über eine Statusanzeige verfügt, die ihm mitteilt, ob die Verpackung des Produkts geschlossen (z.B. versiegelt) ist, ob sie geöffnet und verwendbar ist oder ob er vor der Nutzung des Produkts weitere Informationen von der Internetseite, zu der er über den optischen Code gelangt, abrufen soll. Bei der Statusanzeige kann es sich beispielsweise um eine oder mehrere Leuchtdioden (LED) oder um eine Flüssigkristallanzeige (LCD) handeln. Es ist denkbar, dass die Steuereinheit des Funketiketts so konfiguriert ist, dass sie die mittels der Statusanzeige angezeigten Informationen ändert, wenn die mittels eines oder mehrerer Sensoren erfassten Messwerte definierte Werte annehmen oder erreichen. Beispielsweise kann die Statusanzeige anzeigen, dass die Verpackung ordnungsgemäß verschlossen ist, wenn der Verpackungszustandssensor registriert, dass die Verpackung verschlossen ist. Die Statusanzeige kann anzeigen, dass die Verpackung geöffnet ist, wenn der Verpackungszustandssensor registriert, dass die Verpackung geöffnet (worden) ist. Die Statusanzeige kann anzeigen (Warnsignal), dass das Produkt schädlichen Umweltbedingungen (eine zu hohe Temperatur, eine zu niedrige Temperatur, eine zu hohe Luftfeuchte, ein zu hoher Druck, eine zu hohe Beschleunigung und dergleichen) ausgesetzt war, wenn ein Sensor registriert, dass ein Grenzwert (Temperatur, Luftfeuchte, Druck, Beschleunigungskraft etc.) unter- oder überschritten (worden) ist. Der Käufer/Nutzer wird durch ein solches Warnsignal darauf hingewiesen, dass eventuell etwas mit dem Produkt nicht in Ordnung ist und er vor einer Verwendung Informationen über die Internetseite abrufen sollte. Denkbar ist auch, dass das Funketikett über eine Empfangseinheit verfügt, mit dem das Funketikett ein Signal empfangen kann. Auf diese Weise ist es zum Beispiel möglich, die Statusanzeige über ein externes Signal zu ändern, zum Beispiel, um ein Produkt zurückzurufen.

In einer besonders bevorzugten Ausführungsform liegt das Funketikett zusammen mit einer elektrischen Energieversorgungseinheit als ein Folienverbund vor. Ein Folienverbund ist vorteilhaft, weil er flexibel (biegsam) ist und damit sowohl auf ebenen als auch gekrümmten Flächen einer Verpackung aufgebracht werden kann. Ein Folienverbund kann in einem Rolle-zu-Rolle-Verfahren kostengünstig in großen Mengen produziert werden (siehe z.B. Zheng Cui et al.: Printed Electronics, Wiley 2016, ISBN: 9781118920923; S. Lanceros-Méndez et al.: Printed Batteries, Wiley 2018, ISBN: 9781119287896).

Der Folienverbund umfasst mindestens eine Trägerschicht. Auf die mindestens eine Trägerschicht (auf die Oberseite) sind eine Antenne und elektrische Leiterbahnen aufgebracht. Die Antenne und/oder die Leiterbahnen können beispielsweise mittels eines Druckverfahren auf die mindestens eine Trägerschicht aufgebracht sein (siehe z.B. EP0787371A1, WO2010/068469A1, WO2013/180399A1). Auf die mindestens eine Trägerschicht (auf die Oberseite) ist mindestens ein integrierter Schaltkreis (IC) aufgebracht, wobei der mindestens eine integrierte Schaltkreis eine Steuereinheit, mindestens einen Sensor zur Erfassung eines Verpackungszustands, eine Sendeeinheit und einen Datenspeicher umfasst. Auf die mindestens eine Trägerschicht (auf die Oberseite) ist eine elektrochemische Zelle aufgebracht. Der Begriff elektromagnetische Zelle umfasst sowohl Einzelzellen mit nur einer Anode und einer Kathode als auch einen Verbund aus mehreren Einzelzellen (Batterie). Vorzugsweise ist die elektromagnetische Zelle in einem Druckverfahren auf den mindestens einen Träger aufgebracht worden.

Die elektrischen Leiterbahnen verbinden den integrierten Schaltkreis mit der elektrochemische Zelle und mit der Antenne.

Unterhalb der mindestens einen Trägerschicht (auf der Unterseite) befindet sich eine Adhäsionsschicht (Klebeschicht) zum Verbinden des Folienverbundes mit einer Verpackung. Vorzugsweise ist die Adhäsionsschicht mit einer Schutzschicht (Abziehfolie) versehen, die rückstandslos entfernt werden kann, bevor das Funketikett auf die Verpackung aufgeklebt wird.

Als Trägerfolie wird vorzugsweise eine flexible Kunststofffolie, beispielsweise aus PI, PP, MOPP, PE, PPS, PEEK, PEK, PEI, PSU, PAEK, LCP1 PEN, PBT, PET, PA, PC, COC, POM1 ABS, PVC, Fluopolymer, wie Teflon oder dergleichen eingesetzt.

Vorzugsweise ist die mindestens eine Trägerfolie aus Polyethylenterephthalat, Polyethylennaphthalat, Polyester, Polyimid, Polypropylen, BOPP (*biaxially oriented polypropylene*), Polyethylen oder Polyamid gebildet.

Die Trägerfolie weist vorzugsweise eine Dicke von 5 - 700 µm, bevorzugt 5 - 200 µm, besonders bevorzugt 30 - 100 µm auf.

Ferner können als Trägerfolien auch Papier oder Verbünde mit Papier, beispielsweise Verbünde mit Kunststoffen mit einem Flächengewicht von 20 - 500 g/m², vorzugsweise 40 - 200 g/m², verwendet werden. Ferner können als Trägerfolien Gewebe oder Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefaservliese eingesetzt werden. Die eingesetzten Gewebe oder Vliese weisen ein Flächengewicht von etwa 20 g/m² bis 500 g/m² auf. Gegebenfalls können diese Gewebe oder Vliese oberflächenbehandelt sein.

Selbstverständlich kann die mindestens eine Trägerfolie auch aus zwei oder mehr unterschiedlichen Lagen, wie Kunststoffschichten, Papierschichten, Metallschichten usw., gebildet sein, die miteinander beispielsweise verklebt oder laminiert sind.

Als metallische Schicht für die Antenne und/oder die elektrischen Leitbahnen kommen Au, Ag, Cu, AI, Zn, und Cu in Frage. Mögliche Beschichtungsmethoden beinhalten beispielsweise Sieb-, Tief-, Flexo-, Inkjet-, oder Offsetdruck. Ferner kommen auch gedruckte leitfähige Schichten, wie leitfähige Polymere, Ag- oder Cu-Leitpaste, Carbonleitpaste in Frage. Die Dicke der die Antenne und/oder elektrischen Leiterbahnen bildenden metallischen Schichten beträgt vorzugsweise 0,5 bis 50 µm.

Die auf die mindestens eine Trägerfolie (auf die Oberseite) aufgebrachten Komponenten können mit einer Schutzfolie, einem Lack oder einer Beschichtung versehen sein.

Vergleichbare Folienverbunde und Verfahren zur ihrer Herstellung sind im Stand der Technik beschrieben (siehe z.B.: WO2007/101688A1, WO2009/000446A1, WO2018223171A2, WO2008/067830A1).

Vorzugsweise weist der flächig ausgeführte Folienverbund eine flächige Ausdehnung (Länge mal Breite) im Bereich von 10 cm² bis 200 cm² auf. Die Dicke beträgt vorzugsweise 0,5 mm bis 5 mm. Der flächig ausgeführte Folienverbund kann eine beliebige Form aufweisen; vorzugsweise weist die Fläche, mit der der Folienverbund mit einer Verpackung verbunden wird, eine viereckige (z.B. rechteckige, quadratische oder trapezoide), fünfeckige oder sechseckige (Grund-)Form auf.

Vorzugsweise ist zwischen zwei Schichten des Folienverbundes ein elektrischer Leiter (z.B. in Form eines leitfähigen Drahtes oder einer elektrisch leitfähigen Leiterbahn) eingebracht. Der Sensor ist konfiguriert, eine Unterbrechung des elektrischen Leiters beispielsweise anhand der damit verbundenen Änderung der elektrischen Leitfähigkeit des elektrischen Leiters zu erfassen. Vorzugsweise weist der elektrische Leiter eine U-Form auf. Der Begriff "U-Form" schließt auch ähnliche Formen wie die des Buchstaben U ein, wie beispielsweise die Form eines V, die Form eines Hufeisens, die Form eines Rechtecks, bei dem eine Seite fehlt, die Form eines Trapez, bei dem eine Seite fehlt, die Form einer Schlaufe, und dergleichen. Die U-Form erstreckt sich vorzugsweise entlang der Grundfläche des Funketiketts.

In einer besonders bevorzugten weist das Funketikett einen Ausläufer (Vorsprung) auf, der sich an einer Seite des Funketiketts in eine Richtung erstreckt. Es handelt sich bei einem derartigen Ausläufer also um eine Erweiterung des Funketiketts an einer Seite des Funketiketts in eine Richtung, die parallel zur Grundfläche des Funketiketts verläuft. Dabei ist der Ausläufer schmaler als die Seite des Funketiketts, von der aus sich der Ausläufer nach außen erstreckt. Auf dem Ausläufer oder unterhalb des Ausläufers oder innerhalb des Ausläufers (z.B. zwischen zwei Schichten oder Folien) ist vorzugsweise der elektrische Leiter eingebracht. Auch in dieser Ausführungsform erstreckt sich der elektrische Leiter vorzugsweise U-förmig entlang des Ausläufers. Wenn das Funketikett auf eine Verpackung aufgebracht wird, kann sie so auf die Verpackung aufgebracht werden, dass der Ausläufer über einer Öffnung und/oder eines Zugangs zur Verpackung aufgebracht wird. Beim Öffnen der Verpackung wird dann der Ausläufer durchtrennt und dabei der elektrische Leiter unterbrochen.

Der Ausläufer kann ein Bestandteil der mindestens einen Trägerfolie sein; er kann aber auch an die mindestens eine Trägerfolie angebracht sein.

In einer besonders bevorzugten Ausführungsform ist zwischen dem Ausläufer und der Trägerfolie bzw. dem übrigen Teil der Trägerfolie (je nachdem, ob der Ausläufer ein Bestandteil der Trägerfolie oder ein separates Teil ist), und/oder innerhalb des Ausläufers eine Sollbruchstelle (Reißkante, Bruchkante, Schwachstelle) vorhanden. Bei einer mechanischem Beanspruchung des Ausläufers, insbesondere bei einem Ziehen an dem Ausläufer (z.B. beim Öffnen der Verpackung) wird der Ausläufer an der Sollbruchstelle von der (übrigen) Trägerfolie abgetrennt bzw. durchtrennt. Diese Abtrennung/Durchtrennung erfasst auch den im Ausläufer befindlichen elektrischen Leiter, der dann unterbrochen wird. Durch die Sollbruchstelle wird das Unterbrechen des elektrischen Leiters zum einen erleichtert, zum anderen aber vor allem in eine definierte Weise gelenkt: der elektrische Leiter wird nicht irgendwo durchtrennt, sondern entlang der Sollbruchstelle. Die Sollbruchstelle kann beispielsweise als Perforation, Einkerbung, Verjüngung, Rille, Anschnitt, Klebeverbindung und/oder dergleichen ausgeführt sein.

Die Erfindung wird nachstehend anhand von Figuren und Beispielen näher erläutert, ohne die Erfindung auf die in den Figuren und Beispielen genannten Merkmale und Merkmalskombinationen beschränken zu wollen.

Es zeigen:

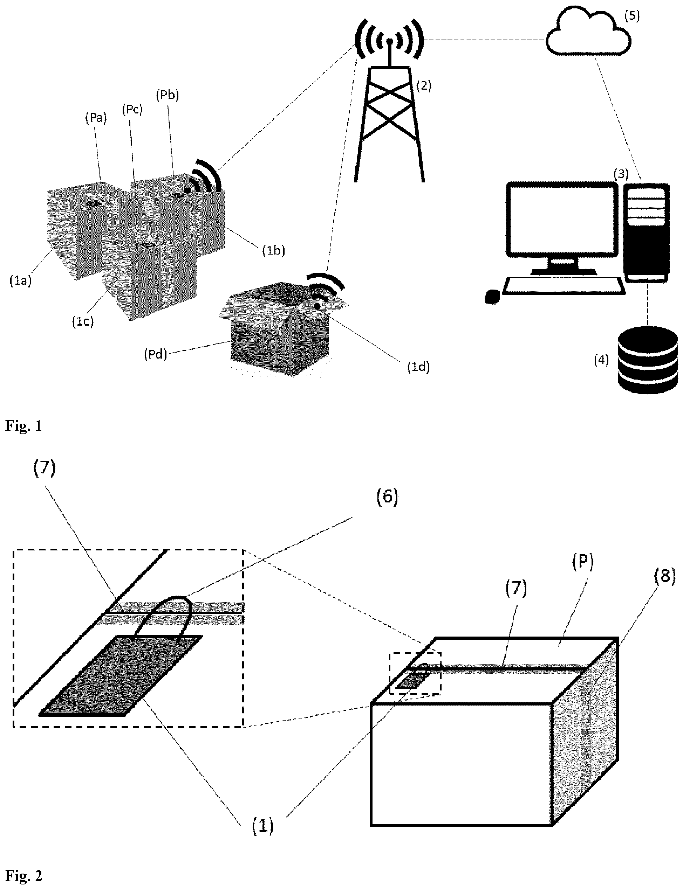

Figur 1 zeigt schematisch ein Beispiel für ein erfindungsgemäßes System umfassend eine Mehrzahl an Funketiketten (1a, 1b, 1c, 1d), einen Sendeempfänger (2) und ein Computersystem (3).

Die Funketiketten (1a, 1b, 1c, 1s) sind an den Verpackungen der Produkte (Pa, Pb, Pc, Pd) angebracht. Die Verpackungen von drei Produkten (Pa, Pb, Pc) befinden sich im ungeöffneten Zustand; die Verpackung eines Produkts (Pd) befindet sich im geöffneten Zustand.

In der Figur ist durch Funksymbole angedeutet, dass zwei Funketiketten (1b, 1d) jeweils Informationen versenden. Die Informationen können eindeutige Kennungen der Funketiketten, Zustandsinformationen zu den Verpackungszuständen und ggf. weitere Informationen umfassen.

Die versandten Informationen können von dem Sendeempfänger (2) empfangen werden. Der Sendeempfänger ergänzt die empfangenen Informationen mindestens um eine Ortsinformation und übermittelt alle Informationen über ein Netzwerk (5) an das Computersystem (3). Das Computersystem (3) ist mit einer Datenbank (4) verbunden. In Fig. 1 ist das Computersystem (3) direkt mit der Datenbank (4) verbunden. Es ist auch möglich, dass das Computersystem (3) über das Netzwerk (5) mit der Datenbank (4) verbunden ist.

Anhand der empfangenen eindeutigen Kennungen der Funketiketten kann das Computersystem (3) die jeweiligen Produkte, denen die eindeutigen Kennungen zugeordnet sind, in der Datenbank (4) ermitteln und die empfangene Ortsinformation sowie die empfangene Zustandsinformation zum jeweiligen Produkt abspeichern.

Figur 2 zeigt schematisch ein Beispiel für ein Funketikett (1), das an der Verpackung eines Produkts (P) angebracht ist. Die Verpackung ist durch einen Klebestreifen (8) verschlossen. Würde man den Klebestreifen (8) abziehen oder entlang der Linie (7) aufschneiden, würde ein elektrischer Leiter (6) (z.B. ein elektrisch leitfähiger Draht), der Bestandteil des Funketiketts (1) ist, unterbrochen werden. Das Funketikett (1) kann so hergerichtet sein, dass es die Unterbrechung des elektrischen Leiters (6) erkennt und somit unterscheiden kann, ob die Verpackung ungeöffnet oder geöffnet ist.

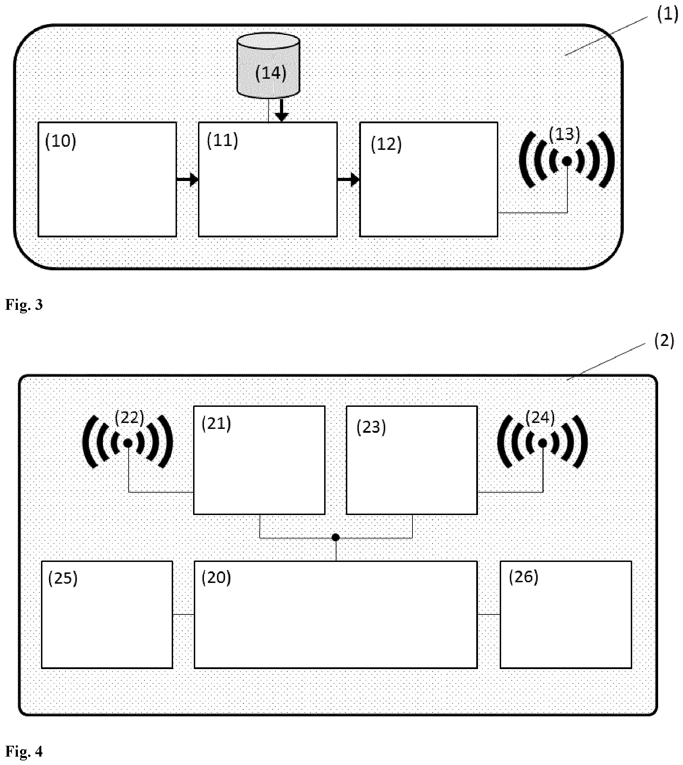

Figur 3 zeigt schematisch ein Beispiel für ein Funketikett (1). Das Funketikett (1) verfügt über einen Sensor (10) zur Erfassung des Verpackungszustands (z.B. geöffnet/ungeöffnet). Eine Steuereinheit (11) dient der Steuerung der einzelnen Komponenten und der Koordinierung der Daten- und Signalflüsse. Mittels einer Sendeeinheit (12, 13) können Informationen über Funk versandt werden. In einem Datenspeicher (14) ist eine eindeutige Kennung gespeichert.

Figur 4 zeigt schematisch ein Beispiel für einen Sendeempfänger (2). Der Sendeempfänger (2) verfügt über eine Empfangseinheit (21, 22) mit der Informationen über Mobilfunk empfangen werden können. Eine Steuereinheit (20) dient der Steuerung der einzelnen Komponenten und der Koordinierung der Daten- und Signalflüsse. Mittels einer Ortsermittlungseinheit (25) kann der Ort, an dem sich der Sendeempfänger (2) oder ein Funketikett (nicht gezeigt) befindet, ermittelt werden (Ortsinformation). Über eine Sendeeinheit (23, 24) können Informationen über ein Netzwerk (nicht gezeigt) an ein Computersystem (nicht gezeigt) übermittelt werden.

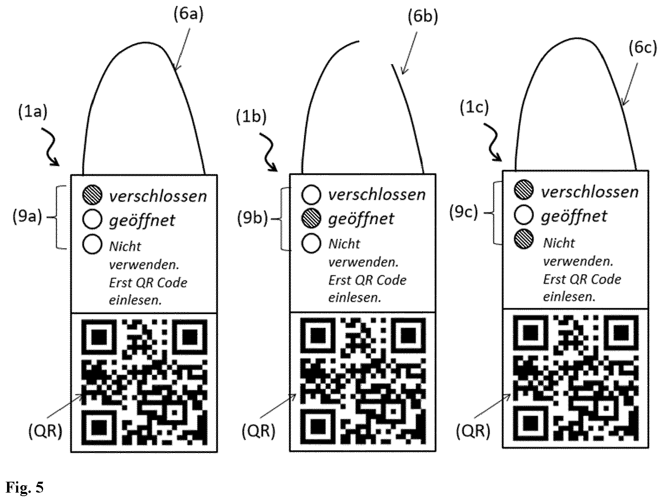

Figur 5 zeigt beispielhaft drei Funketiketten (1a, 1b, 1c) in verschiedenen Zuständen. Jedes der Funketiketten (1a, 1b, 1c) verfügt über einen leitfähigen Draht (6a, 6b, 6c), eine Statusanzeige (9a, 9b, 9c) und einen optisch lesbaren Code (QR).

Im Fall des Funketiketts (1a), ist der leitfähige Draht (6a) intakt. Eine Steuereinheit (nicht gezeigt) des Funketiketts erfasst über einen Sensor (nicht gezeigt), die Leitfähigkeit des Drahtes (6a) und erkennt, dass der Draht (6a) intakt ist. Die Steuereinheit veranlasst die Statusanzeige (9a) anzuzeigen, dass die Verpackung verschlossen ("sealed") ist. Diese Anzeige erfolgt zum Beispiel mittels einer Leuchtdiode oder einer Flüssigkristallanzeige.

Im Fall des Funketiketts (1b), ist der leitfähige Draht (6b) unterbrochen. Die Steuereinheit erfasst mittels des Leitfähigkeitssensors, dass der Draht (6b) unterbrochen ist und veranlasst die Statusanzeige (9b) anzuzeigen, dass die Verpackung geöffnet ("unsealed") ist.

Im Fall des Funketiketts (1c), ist der leitfähige Draht (6c) intakt. Die Steuereinheit erfasst mittels des Leitfähigkeitssensors, dass der Draht (6c) intakt ist und veranlasst die Statusanzeige (9c) anzuzeigen, dass die Verpackung verschlossen ("sealed") ist. Gleichzeitig wird über die Statusanzeige (9c) angezeigt, dass der Käufer/Nutzer das Produkt nicht verwenden sondern zunächst den optischen Code (QR) einlesen sollte. Über den optischen Code gelangt der Käufer/Nutzer zu einer Internetseite, die ihm weitere Informationen gibt.

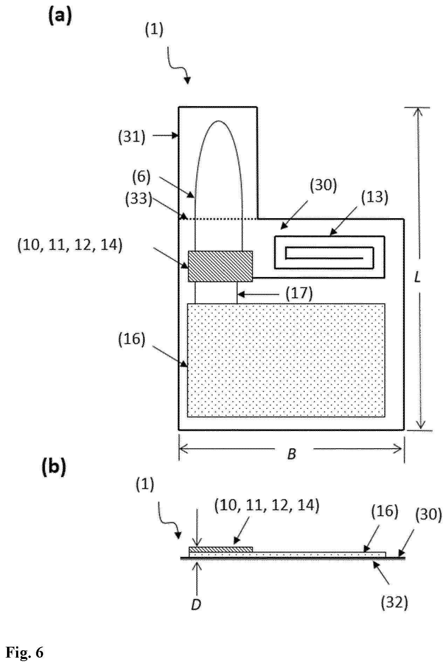

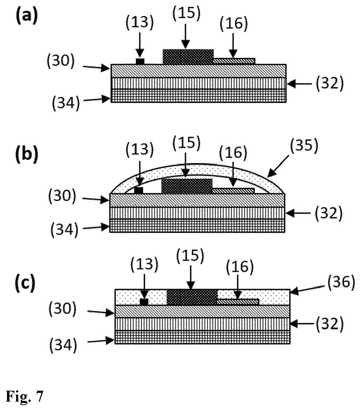

Figur 6 zeigt eine bevorzugte Ausführungsform des erfindungsgemäßen Funketiketts schematisch (a) in einer Aufsicht (von oben) und (b) in einer Seitenansicht (von vorne). Das Funketikett (1) weist eine flächige Ausdehnung auf; die Länge *L* und die Breite *B* weisen die gleiche Größenordnung auf, die sind aber um ein Vielfaches größer als die Dicke D. Die Grundform des Funketiketts (1) ist sechseckig bzw. besteht die Grundform aus zwei miteinander verbundenen Rechtecken. Das Funketikett (1) ist als Folienverbund ausgeführt. Das Funketikett (1) weist eine Trägerfolie (30) auf. Auf die Trägerfolie (30) (auf die Oberseite) sind folgende Komponenten aufgebracht: eine Antenne (13), eine Energieversorgungseinheit (16) zum Beispiel in Form einer elektrochemischen Zelle, ein elektrischer Leiter (6), elektrische Leiterbahnen (17) und ein integrierter Schaltkreis der einen Sensor (10), eine Steuereinheit (11) eine Sendeeinheit (12) und einen Datenspeicher (14) vereint. Das Funketikett (1) weist einen Ausläufer (31) auf, der sich ausgehend von einer Seite des Funketiketts (1) in eine Richtung erstreckt. Auf dem Ausläufer (31) ist der elektrische Leiter (6) U-förmig angeordnet. Der Ausläufer (31) wird vom übrigen Teil des Funketiketts (1) durch eine Sollbruchstelle (33) getrennt. Die Sollbruchstelle (33) ist als Perforation ausgeführt. Unterhalb der Trägerfolie (30) ist eine Adhäsionsschicht (32) angebracht, über die das Funketikett (1) mit einer Verpackung eines Produkts verbunden werden kann.

Figur 6 zeigt bevorzugte Ausführungsformen des erfindungsgemäßen Funketiketts schematisch in einer Seitensicht. Das Funketikett (1) ist als Folienverbund ausgeführt. Das Funketikett (1) weist eine Trägerfolie (30) auf. Es sind die folgenden Komponenten zu erkennen, die auf die Trägerfolie (30) aufgebracht sind: eine Antenne (13), ein integrierter Schaltkreis (15) und eine Energieversorgungseinheit (16). Unterhalb der Trägerfolie (30) ist eine Adhäsionsschicht (32) angebracht. Die Adhäsionsschicht (32) wird durch eine Schutzfolie (34) geschützt. In der Ausführungsform (b) ist eine Schutzfolie (35) oberhalb der Trägerfolie (30) angebracht, die die Komponenten (13, 15, 16) auf der Trägerfolie (30) vor Umwelteinflüssen schützt. In der Ausführungsform (c) ist eine Beschichtung (36) auf die Trägerfolie (30) aufgebracht, die die Komponenten (13, 15, 16) auf der Trägerfolie (30) vor Umwelteinflüssen schützt. Die Ausführungsform (a) weist keine Schutzschicht oberhalb der Trägerfolie (30) auf.

## Patentansprüche

1. Funketikett (1),
wobei das Funketikett (1) als ein flexibler Folienverbund ausgeführt ist,
wobei das Funketikett (1) eine eindeutige Kennung umfasst,
wobei das Funketikett (1) so ausgestaltet ist, dass es mit einer Verpackung eines Produkts (P) verbunden werden kann,
wobei das Funketikett (1) einen elektrischen Leiter (6) umfasst, wobei der elektrische Leiter (6) so angeordnet ist, dass der Leiter (6) unterbrochen wird, wenn die Verpackung geöffnet wird,
wobei das Funketikett (1) mindestens einen Sensor (10) umfasst, wobei der mindestens eine Sensor (10) einen Verpackungszustand erfasst, wobei der Sensor (10) konfiguriert ist, den Verpackungszustand "ungeöffnete Verpackung" für den Fall zu erfassen, dass der elektrische Leiter (6) nicht unterbrochen ist, und den Verpackungszustand "geöffnete Verpackung" für den Fall zu erfassen, dass der elektrische Leiter (6) unterbrochen ist,
wobei das Funketikett (1) ein aktives Funketikett ist und konfiguriert ist, in zeitlichen Abständen die eindeutige Kennung und die erfasste Zustandsinformation zu dem Verpackungszustand über ein Mobilfunknetz an einen Sendeempfänger (2) zu versenden.

2. Funketikett (1) gemäß Anspruch 1, umfassend
mindestens eine Trägerfolie (30), wobei die mindestens eine Trägerfolie (30) eine flächige Ausdehnung mit einer Oberseite und einer Unterseite aufweist,
wobei auf die Oberseite der mindestens einen Trägerfolie (30) folgende Komponenten aufgebracht sind:
eine Sendeeinheit (12), ein Sensor (10) und eine Energieversorgungseinheit (16),
wobei auf der Unterseite der mindestens einen Trägerfolie (30) eine Adhäsionsschicht (32) angebracht ist, über die das Funketikett (1) mit einer Verpackung eines Produkts (P) verbunden werden kann.

3. Funketikett (1) gemäß einem der Ansprüche 1 oder 2, wobei der elektrische Leiter (6) entlang der Oberseite und/oder Unterseite der Trägerfolie (30) U-förmig angeordnet ist.

4. Funketikett (1) gemäß einem der Ansprüche 1 bis 3, umfassend einen Ausläufer (31), wobei der elektrische Leiter (6) U-förmig entlang des Ausläufers (31) verläuft.

5. Funketikett (1) gemäß Anspruch 4, wobei der Ausläufer (31) über eine Sollbruchstelle (33) mit dem übrigen Teil des Funketiketts (1) verbunden ist.

6. Funketikett (1) gemäß einem der Ansprüche 2 bis 5, ferner umfassend eine Steuereinheit (11), einen Datenspeicher (14) und eine Statusanzeige (9a, 9b, 9c), wobei die eindeutige Kennung in dem Datenspeicher (14) gespeichert ist, wobei die Steuereinheit (11) konfiguriert ist, mittels des Sensors (10) den Verpackungszustand zu ermitteln, und die Statusanzeige (9a, 9b, 9c) zu veranlassen, den Verpackungszustand anzuzeigen.

7. Funketikett (1) gemäß einem der Ansprüche 2 bis 6, umfassend einen Sensor zur Erfassung einer Umgebungsbedingung und eine Statusanzeige (9a, 9b, 9c), wobei die Steuereinheit (11) konfiguriert ist, mindestens einen Messwert vom Sensor zu empfangen, den mindestens einen Messwert mit einem definierten Grenzwert zu vergleichen, und für den Fall, dass der Messwert unter- oder oberhalb des definierten Grenzwerts liegt, die Statusanzeige (9a, 9b, 9c) zu veranlassen, ein Warnsignal anzuzeigen.

8. Funketikett (1) gemäß einem der Ansprüche 1 bis 7, ferner umfassend eine Empfangseinheit zum Empfang eines Signals über das Mobilfunknetz und eine Statusanzeige (9a, 9b, 9c), wobei die Steuereinheit (11) konfiguriert ist, mittels der Empfangseinheit ein Signal zu empfangen und die Statusanzeige (9a, 9b, 9c) zu veranlassen, ein Warnsignal anzuzeigen.

9. Funketikett (1) gemäß einem der Ansprüche 1 bis 8, umfassend ein Modem und eine Antenne zum Versenden von Informationen über ein GSM-, GPRS-, 2G-, 3G-, LTE-, 4G-, 5G-Mobilfunknetzwerk

10. Funketikett (1) gemäß einem der Ansprüche 1 bis 9, umfassend einen optisch lesbaren Code (QR), wobei der optisch lesbare Code (QR) eine eindeutige Kennung umfasst, anhand der das Funketikett (1) und/oder das Produkt (P) eindeutig identifiziert werden können.

11. Produkt (P), umfassend eine Verpackung und ein Funketikett (1) gemäß einem der Ansprüche 1 bis 10, wobei das Funketikett (1) über einer Öffnung der Verpackung oder einem Zugang zur Verpackung so angebracht ist, dass beim Öffnen der Verpackung ein elektrischer Leiter (6) unterbrochen wird.

12. System umfassend
- mindestens ein Funketikett (1) gemäß einem der Ansprüche 1 bis 10,
- mindestens einen Sendeempfänger (2),
- ein Computersystem (3) und
- eine Datenbank (4)
• wobei der mindestens eine Sensor (10) einen Verpackungszustand erfasst, wenn der Sensor (10) mit einer Verpackung eines Produkts (P) verbunden ist,
• wobei das mindestens eine Funketikett (1) konfiguriert ist, in zeitlichen Abständen die eindeutige Kennung und die Zustandsinformation zu dem Verpackungszustand an den mindestens einen Sendeempfänger (2) zu versenden,
• wobei der mindestens eine Sendeempfänger (2) konfiguriert ist, die eindeutige Kennung und die Zustandsinformation von dem mindestens einen Funketikett (1) zu empfangen,
• wobei der mindestens eine Sendeempfänger (2) konfiguriert ist, eine Ortsinformation zu ermitteln,
• wobei der mindestens eine Sendeempfänger (2) konfiguriert ist, die eindeutige Kennung, die Zustandsinformation und die Ortsinformation über ein Netzwerk an das Computersystem (3) zu übermitteln,
• wobei das Computersystem (3) konfiguriert ist, die eindeutige Kennung, die Zustandsinformation und die Ortsinformation vom Sendeempfänger (2) zu empfangen,
• wobei das Computersystem (3) konfiguriert ist, anhand der eindeutigen Kennung ein Produkt (P) in der Datenbank zu identifizieren,
• wobei das Computersystem (3) konfiguriert ist, für das identifizierte Produkt die Ortsinformation als Standort des Produkts (P) zu speichern, und
• wobei das Computersystem (3) konfiguriert ist, für das identifizierte Produkt die Zustandsinformation als Verpackungszustand zu speichern.

13. System gemäß Anspruch 12, wobei die Ortsinformation aus der Mobilfunkzelle, in der sich der Sendeempfänger (2) befindet, abgeleitet wird, wobei das Computersystem (3) konfiguriert ist, eine Zeitinformation zum Verpackungszustand zu speichern, wobei die Zeitinformation angibt, zu welchem Zeitpunkt Änderungen des Verpackungszustands erfolgt sind.

14. Verfahren umfassend die Schritte
- Entfernen einer Schutzfolie (34) von einem Funketikett (1) gemäß einem der Ansprüche 2 bis 10
- Aufkleben des Funketiketts mittels der Adhäsionsschicht (32) auf eine Verpackung eines Produkts (P),
- Erfassen eines Verpackungszustandes durch das Funketikett (1).
- Übermitteln der eindeutigen Kennung und einer Zustandsinformation zu dem Verpackungszustand an einen Sendeempfänger (2) durch das Funketikett (1) über ein Mobilfunknetz,
- Ermitteln einer Ortsinformation durch den Sendeempfänger (2),
- Übermitteln der eindeutigen Kennung, der Zustandsinformation und der Ortsinformation über ein Netzwerk an ein Computersystem (3) durch den Sendeempfänger (2),
- Identifizieren eines Produkts anhand der eindeutigen Kennung durch das Computersystem (3),
- Speichern der Ortsinformation als Standort des identifizierten Produkts in einer Datenbank (4),
- Speichern der Zustandsinformation als Verpackungszustand des identifizierten Produkts in der Datenbank (4).

15. Verwendung eines Funketiketts (1) gemäß einem der Ansprüche 1 bis 10 und/oder eines Systems gemäß Anspruch 12 zur Optimierung der Herstellung von Produkten und/oder zur Optimierung der Lagerhaltung von Produkten und/oder zur Optimierung des Vertriebs von Produkten.

## Claims

1. Radio tag (1),
wherein the radio tag (1) is designed as a flexible film composite,
wherein the radio tag (1) comprises a unique identifier, wherein the radio tag (1) is designed such that it is able to be attached to packaging of a product (P),
wherein the radio tag (1) comprises an electrical conductor (6), wherein the electrical conductor (6) is arranged such that the conductor (6) is interrupted when the packaging is opened,
wherein the radio tag (1) comprises at least one sensor (10), wherein the at least one sensor (10) detects a packaging status, wherein the sensor (10) is configured to detect the packaging status "unopened packaging" in the event that the electrical conductor (6) is not interrupted, and to detect the packaging status "open packaging" in the event that the electrical conductor (6) is interrupted,
wherein the radio tag (1) is an active radio tag and is configured to send a unique identifier and the detected status information about the packaging status to a transceiver (2) over a mobile radio network at time intervals.

2. Radio tag (1) according to Claim 1, comprising
at least one carrier film (30), wherein the at least one carrier film (30) has a flat extent with a top side and a bottom side,
wherein the following components are applied to the top side of the at least one carrier film (30): a transmission unit (12), a sensor (10) and an energy supply unit (16), wherein an adhesive layer (32) is affixed to the bottom side of the at least one carrier film (30), via which adhesive layer the radio tag (1) is able to be attached to packaging of a product (P).

3. Radio tag (1) according to either of Claims 1 and 2, wherein the electrical conductor (6) is arranged along the top side and/or bottom side of the carrier film (30) in a U-shape.

4. Radio tag (1) according to one of Claims 1 to 3, comprising an offshoot (31), wherein the electrical conductor (6) runs along the offshoot (31) in a U-shape.

5. Radio tag (1) according to Claim 4, wherein the offshoot (31) is connected to the remaining part of the radio tag (1) via a predetermined breaking point (33).

6. Radio tag (1) according to one of Claims 2 to 5, furthermore comprising a control unit (11), a data memory (14) and a status display (9a, 9b, 9c), wherein the unique identifier is stored in the data memory (14), wherein the control unit (11) is configured to ascertain the packaging status by way of the sensor (10) and to prompt the status display (9a, 9b, 9c) to display the packaging status.

7. Radio tag (1) according to one of Claims 2 to 6, comprising a sensor for detecting an environmental condition and a status display (9a, 9b, 9c), wherein the control unit (11) is configured to receive at least one measured value from the sensor, to compare the at least one measured value with a defined limit value, and in the event that the measured value is below or above the defined limit value, to prompt the status display (9a, 9b, 9c) to display a warning signal.

8. Radio tag (1) according to one of Claims 1 to 7, furthermore comprising a reception unit for receiving a signal over the mobile radio network and a status display (9a, 9b, 9c), wherein the control unit (11) is configured to receive a signal by way of the reception unit and to prompt the status display (9a, 9b, 9c) to display a warning signal.

9. Radio tag (1) according to one of Claims 1 to 8, comprising a modem and an antenna for sending information over a GSM, GPRS, 2G, 3G, LTE, 4G or 5G mobile radio network.

10. Radio tag (1) according to one of Claims 1 to 9, comprising an optically readable code (QR), wherein the optically readable code (QR) comprises a unique identifier on the basis of which the radio tag (1) and/or the product (P) are able to be unambiguously identified.

11. Product (P) comprising packaging and an active radio tag (1) according to one of Claims 1 to 10, wherein the radio tag (1) is affixed above an opening in the packaging or an access point to the packaging such that an electrical conductor (6) is interrupted when the packaging is opened.

12. System comprising
- at least one radio tag (1) according to one of Claims 1 to 10,
- at least one transceiver (2),
- a computer system (3) and
- a database (4)
• wherein the at least one sensor (10) detects a packaging status when the sensor (10) is attached to packaging of a product (P),
• wherein the at least one radio tag (1) is configured to send the unique identifier and the status information about the packaging status to the at least one transceiver (2) at time intervals,
• wherein the at least one transceiver (2) is configured to receive the unique identifier and the status information from the at least one radio tag (1),
• wherein the at least one transceiver (2) is configured to ascertain location information,
• wherein the at least one transceiver (2) is configured to transmit the unique identifier, the status information and the location information to the computer system (3) over a network,
• wherein the computer system (3) is configured to receive the unique identifier, the status information and the location information from the transceiver (2),
• wherein the computer system (3) is configured to identify a product (P) in the database on the basis of the unique identifier,
• wherein the computer system (3) is configured, for the identified product, to store the location information as the location of the product (P), and
• wherein the computer system (3) is configured to store the status information as packaging status for the identified product.

13. System according to Claim 12, wherein the location information is derived from the mobile radio cell in which the transceiver (2) is located, wherein the computer system (3) is configured to store time information about the packaging status, wherein the time information indicates the time at which changes were made to the packaging status.

14. Method comprising the steps of
- removing a protective film (34) from a radio tag (1) according to one of Claims 2 to 10,
- sticking the radio tag to packaging of a product (P) by way of the adhesive layer (32),
- the radio tag (1) detecting a packaging status,
- the radio tag (1) transmitting the unique identifier and status information about the packaging status to a transceiver (2) over a mobile radio network,
- the transceiver (2) ascertaining location information,
- the transceiver (2) transmitting the unique identifier, the status information and the location information to a computer system (3) over a network,
- the computer system (3) identifying a product on the basis of the unique identifier,
- storing the location information as the location of the identified product in a database (4),
- storing the status information as the packaging status of the identified product in the database (4).

15. Use of a radio tag (1) according to one of Claims 1 to 10 and/or of a system according to Claim 12 to optimize the manufacture of products and/or to optimize the storage of products and/or to optimize the distribution of products.

## Revendications

1. Etiquette RFID (1),
l'étiquette RFID (1) étant réalisée sous la forme d'un composite de film flexible,
l'étiquette RFID (1) comprenant un identifiant univoque, l'étiquette RFID (1) étant configurée de façon à pouvoir être reliée à un emballage d'un produit (P),
l'étiquette RFID (1) comprenant un conducteur électrique (6), le conducteur électrique (6) étant disposé de telle sorte que le conducteur (6) se rompe à l'ouverture de l'emballage,
l'étiquette RFID (1) comprenant au moins un capteur (10), ledit au moins un capteur (10) détectant un état d'emballage, le capteur (10) étant configuré pour détecter l'état d'emballage « emballage non ouvert » si le conducteur électrique (6) n'a pas été rompu, et pour détecter l'état d'emballage « emballage ouvert » si le conducteur électrique (6) a été rompu,
l'étiquette RFID (1) étant une étiquette RFID active et étant configurée pour envoyer à certains intervalles de temps l'identifiant univoque et l'information d'état détecté concernant l'état d'emballage par un réseau de communication mobile à un émetteur/récepteur (2).

2. Etiquette RFID (1) selon la revendication 1, comprenant
au moins un film support (30), ledit au moins un film support (30) présentant une étendue plane avec une face supérieure et une face inférieure,
dans laquelle les composants suivants sont fixés à la face supérieure dudit au moins un film support (30) : une unité d'émission (12), un capteur (10) et une unité d'alimentation en énergie (16),
dans laquelle à la face inférieure dudit au moins un film support (30) est fixée une couche adhésive (32) par laquelle l'étiquette RFID (1) peut être reliée à un emballage d'un produit (P).

3. Etiquette RFID (1) selon l'une quelconque des revendications 1 ou 2, dans laquelle le conducteur électrique (6) est disposé en forme de U le long de la face supérieure et/ou de la face inférieure du film porteur (30).

4. Etiquette RFID (1) selon l'une quelconque des revendications 1 à 3, comprenant un prolongement (31), dans laquelle le conducteur électrique (6) s'étend en forme de U le long du prolongement (31).

5. Etiquette RFID (1) selon la revendication 4, dans laquelle le prolongement (31) est relié au reste de l'étiquette RFID (1) par un point destiné à la rupture (33) .

6. Etiquette RFID (1) selon l'une quelconque des revendications 2 à 5, comprenant en outre une unité de commande (11), une mémoire de données (14) et un affichage d'état (9a, 9b, 9c), l'identifiant univoque étant mémorisé dans la mémoire de données (14), dans laquelle l'unité de commande (11) est configurée pour établir au moyen du capteur (10) l'état d'emballage et pour amener l'affichage d'état (9a, 9b, 9c) à afficher l'état d'emballage.

7. Etiquette RFID (1) selon l'une quelconque des revendications 2 à 6, comprenant un capteur pour détecter une condition environnementale et un affichage d'état (9a, 9b, 9c), dans laquelle l'unité de commande (11) est configurée pour recevoir au moins une valeur de mesure du capteur, pour comparer ladite au moins une valeur de mesure avec une valeur limite définie, et au cas où la valeur de mesure se situerait au-dessus ou au-dessous de la valeur limite définie, pour amener l'affichage d'état (9a, 9b, 9c) à afficher un signal d'alarme.

8. Etiquette RFID (1) selon l'une quelconque des revendications 1 à 7, comprenant en outre une unité de réception pour recevoir un signal par le réseau de communication mobile et un affichage d'état (9a, 9b, 9c), dans laquelle l'unité de commande (11) est configurée pour recevoir un signal au moyen de l'unité de réception, et pour amener l'affichage d'état (9a, 9b, 9c) à afficher un signal d'alarme.

9. Etiquette RFID (1) selon l'une quelconque des revendications 1 à 8, comprenant un modem et une antenne pour envoyer des informations par un réseau de communication mobile GSM, GPRS, 2G, 3G, LTE, 4G ou 5G.

10. Etiquette RFID (1) selon l'une quelconque des revendications 1 à 9, comprenant un code lisible optiquement (QR), le code lisible optiquement (QR) comprenant un identifiant univoque qui permet d'identifier de manière univoque l'étiquette RFID (1) et/ou le produit (P).

11. Produit (P), comprenant un emballage et une étiquette RFID (1) selon l'une quelconque des revendications 1 à 10, dans lequel l'étiquette RFID (1) est fixée au-dessus d'une ouverture de l'emballage ou d'un accès à l'emballage de telle sorte qu'un conducteur électrique (6) se rompe à l'ouverture de l'emballage.

12. Système, comprenant
- au moins une étiquette RFID (1) selon l'une quelconque des revendications 1 à 10,
- au moins un émetteur/récepteur (2),
- un système informatique (3), et
- une base de données (4),
• dans lequel ledit au moins un capteur (10) détecte un état d'emballage lorsque le capteur (10) est relié à un emballage d'un produit (P),
• dans lequel ladite au moins une étiquette RFID (1) est configurée pour envoyer à certains intervalles de temps l'identifiant univoque et l'information d'état concernant l'état d'emballage audit au moins un émetteur/récepteur (2),
• dans lequel ledit au moins un émetteur/récepteur (2) est configuré pour recevoir l'identifiant univoque et l'information d'état de ladite au moins une étiquette RFID (1),
• dans lequel ledit au moins un émetteur/récepteur (2) est configuré pour établir une information de lieu,
• dans lequel ledit au moins un émetteur/récepteur (2) est configuré pour transmettre l'identifiant univoque, l'information d'état et l'information de lieu par un réseau au système informatique (3),
• dans lequel le système informatique (3) est configuré pour recevoir l'identifiant univoque, l'information d'état et l'information de lieu de l'émetteur/récepteur (2),
• dans lequel le système informatique (3) est configuré pour identifier à l'aide de l'identifiant univoque un produit (P) dans la base de données,
• dans lequel le système informatique (3) est configuré pour mémoriser pour le produit identifié l'information de lieu comme l'emplacement du produit (P), et
• dans lequel le système informatique (3) est configuré pour mémoriser pour le produit identifié l'information d'état sous forme d'état d'emballage.

13. Système selon la revendication 12, dans lequel l'information de lieu est dérivée à partir de la cellule de radiocommunication dans laquelle se trouve l'émetteur/récepteur (2), le système informatique (3) étant configuré pour mémoriser une information de temps concernant l'état d'emballage, l'information de temps indiquant à quel moment des modifications de l'état d'emballage ont eu lieu.

14. Procédé comprenant les étapes consistant à :
- retirer un film de protection (34) d'une étiquette RFID (1) selon l'une quelconque des revendications 2 à 10,
- coller l'étiquette RFID sur un emballage d'un produit (P), au moyen de la couche adhésive (32),
- détecter un état d'emballage par l'étiquette RFID (1),
- transmettre l'identifiant univoque et une information d'état concernant l'état d'emballage à un émetteur/récepteur (2) par l'étiquette RFID (1) à travers un réseau de communication mobile,
- établir une information de lieu par l'émetteur/récepteur (2),
- transmettre l'identifiant univoque, l'information d'état et l'information de lieu à travers un réseau à un système informatique (3) par l'émetteur/récepteur (2),
- identifier un produit par le système informatique (3) à l'aide d'un identifiant univoque,
- mémoriser l'information de lieu comme l'emplacement du produit identifié dans une base de données (4),
- mémoriser l'information d'état comme un état d'emballage du produit identifié dans la base de données (4) .

15. Utilisation d'une étiquette RFID (1) selon l'une quelconque des revendications 1 à 10 et/ou d'un système selon la revendication 12 pour optimiser la fabrication de produits et/ou pour optimiser le stockage de produits et/ou pour optimiser la commercialisation de produits.
